# EUROPEAN PATENT SPECIFICATION

(11) **EP 2 843 881 B1**
(45) Date of publication and mention of the grant of the patent: **29.08.2018**
(21) Application number: 13794228.0
(22) Date of filing: 17.05.2013
(51) Int. Cl.: H04L 12/28, H04L 29/06

(54) **METHOD AND APPARATUS FOR MEDIA INFORMATION ACCESS CONTROL , AND DIGITAL HOME MULTIMEDIA SYSTEM**
VERFAHREN UND VORRICHTUNG ZUR KONTROLLE DES ZUGRIFFS AUF MEDIENINFORMATIONEN UND DIGITALES HEIM-MULTIMEDIASYSTEM
PROCÉDÉ ET APPAREIL DE CONTRÔLE D'ACCÈS À DES INFORMATIONS MULTIMÉDIAS, ET SUPPORT MULTIMÉDIA DOMESTIQUE NUMÉRIQUE

(30) Priority: 24.05.2012 CN 201210164403
(43) Date of publication of application: 04.03.2015
(73) Proprietor: Huawei Device Co., Ltd., Longgang District Shenzhen Guangdong 518129 (CN)
(72) Inventor: ZHU, Yu, Shenzhen Guangdong 518129 (CN); SHAN, Zhenwei, Shenzhen Guangdong 518129 (CN)
(74) Representative: Goddar, Heinz J.
(86) International application number: PCT/CN2013/075841
(87) International publication number: WO 2013/174241

(56) References cited:
- CN-A- 101 465 748
- CN-A- 101 764 726
- US-A1- 2009 164 600

## Description

### TECHNICAL FIELD

The present invention pertains to the field of digital home networks, and in particular, relates to a method and apparatus for media information access control, and a digital home multimedia system.

### BACKGROUND

With the development of digital home and general digitization of consumer electronics (Consumer electronics, CE) products, more digital entertainment devices and household appliances products appear in a home. These home network devices are connected in a wired or a wireless manner to form a home network that implements a function such as content sharing or mutual control, which is a concept of a digital home multimedia system that is being conceived and arduously achieved by the industry.

For a purpose of achieving interworking and control among different types of home devices, more home network devices support Universal Plug and Play (Universal Plug and Play, UPnP). In the UPnP system, a user implements control over a home device by using a control device, such as Control Point (CP) in the digital home multimedia system. The CP reads status information of an UPnP device on the home network and controls the UPnP device to perform a corresponding operation by using the UPnP protocol and by calling a control command (action) related to the UPnP device.

For a purpose of achieving media sharing among a plurality of devices on the home network, a digital home multimedia system is built in the prior art. The digital home multimedia system stipulates a standard for home network media sharing by using an UPnP audio and video (Audio and Video, AV) specification. Generally, an architecture of a common digital home multimedia system provided in the prior art includes a control device, a media server (Media Server, MS), and a media renderer (Media Renderer, MR). Generally, the media server provides a content directory service (Content Directory Service, CDS), a connection management service, and a content transport service. Generally, the media renderer provides a playing control service, a connection management service, and a content transport service. In US 2009/0164600 A1, for example, a media zone broker receives media metadata from media zone clients and upon receiving a request for a media item from another media zone client provides availability information to the requesting client which then subsequentially requests the media item from a sharing client at a scheduled time defined by the availability information. US 2010/0161818 A1 provide an enhanced content sharing framework, in which a presence table indexing content globally stored on a respective home network, and policy information identifying users who are authorized to access the respective home network are received from first from first and second home network manager devices that respectively manage first and second home networks. A message is received from a user requesting that particular content be provided from the first home network to a particular content rendering device or content storing device of the second home network. Based on the presence table of the first home network, it is determined that the particular content is stored on the first home network, and, based on the policy information of the first home network, it is determined that the user is authorized to access the particular content on the first home network.

In order to protect media information on the media server, a device protection (Device Protection, DP) service is further introduced into the media server to protect media information on the media server. The device protection service specifically refers to restricting the CP in the digital home multimedia system to read and write media information (such as a media file and metadata) stored on the MS. If the DP is deployed on a certain MS, a read and write permission of the media information in the CDS on the MS may be controlled, so that an untrusted CP or a lower-level CP cannot read or write metadata of certain media information, thereby protecting user privacy.

An existing DP security solution is as follows: 1) A permission corresponding to the CP is set and saved on the MS; 2) When a Transport Layer Security (Transport Layer Security, TLS) channel is established between the CP and the MS, the CP is authenticated to achieve identification of the CP. At present, in an AV5 project, an aggregation (Aggregation) feature is taken into consideration, so that the CDS of the MS supports an aggregation module , such as Aggregation Option (AO) function. The CP may directly access the MS that supports both CDS and AO services and acquire the media information stored in the CDS of another MS. A user does not need to remember which CDS of the MS the media information is stored on, thereby facilitating media sharing within a home scope.

In the prior art, a definition of the MS architecture is extended to make the MS support both the CDS and AO services, and an aggregation module (AO) and an aggregation control module (AO CP) are added on the CDS of the MS.

For the MS that supports both the CDS and AO services, the following security-related issue exists:

That is, when the MS that supports the CDS and AO services externally provides a browsing interface for aggregated media information, how to ensure that when browsing aggregated media information on the MS that supports the CDS and AO services, each CP in the digital home multimedia system has the same browsing rights of the CDS as that provided on the actual MS?

### SUMMARY

Embodiments of the present invention provide a method, and an apparatus for media information access control, and a digital home multimedia system, so as to solve a problem that security of media information is low when the media information in the digital home multimedia system is aggregated for browsing.

According to a first aspect, the present invention provides a method for media information access control, comprising:
aggregating, by a first media server, media information and access rights information of the media information on a second media server; and
returning, by the first media server, to a control device that sends a media access request, according to the aggregated media information and the aggregated access rights information of the media information, a media information list which the control device has rights to access;
wherein the aggregating, by the first media server, media information and access rights information of the media information on a second media server comprises:
   aggregating unrestricted media information on the second media server; and aggregating restricted media information, which the control device has rights to access, on the second media server;
   wherein after the aggregating unrestricted media information on the second media server, the method further comprises:
      receiving the media access request sent by the control device; and when the media access request is a media access request for accessing the restricted media information, performing the aggregating restricted media information, which the control device has rights to access, on the second media server;
      wherein the returning, to a control device that sends a media access request, according to the aggregated media information and the aggregated access rights information of the media information, a media information list which the control device has rights to access comprises:
         when the media access request sent by the control device is received, if the media access request is a media access request for accessing the restricted media information, combining the aggregated unrestricted media information and the aggregated restricted media information which the control device has rights to access, and returning to the control device; otherwise, directly returning the aggregated unrestricted media information to the control device.

According to a second aspect, the present invention provides an apparatus for media information access control, comprising:
a media information aggregation unit, configured to aggregate media information and access rights information of the media information on a second media server; and
a media information access control unit, configured to return, to a control device that sends a media access request, according to the media information and the access rights information of the media information that are aggregated by the media information aggregation unit, a media information list which the control device has rights to access;
wherein the media information aggregation unit comprises:
   an unrestricted media aggregation module, configured to aggregate unrestricted media information on the second media server; and a first restricted media aggregation module, configured to aggregate restricted media information, which the control device has rights to access, on the second media server,
   wherein the apparatus further comprises:
      an access request determining unit, configured to determine whether a received media access request sent by the control device is a media access request for accessing the restricted media information; at this time, if a result of the access request determining unit is yes, the first restricted media aggregation module aggregates the restricted media information, which the control device has rights to access, on the second media server;
      wherein the media information access control unit comprises:
         a second media information returning module, configured to: when the media access request sent by the control device is received, if the media access request is a media access request for accessing the restricted media information, combine the aggregated unrestricted media information and the aggregated restricted media information which the control device has rights to access, and return the combined media information to the control device; otherwise, directly returning the aggregated unrestricted media information to the control device.

In the embodiments of the present invention, the first media server aggregates a media information list and a media information rights table on each second media server. After receiving a media access request sent by a control device, the first media server returns, to the control device, a media information list which the control device has rights to access according to the aggregated media information list and the media information rights table, thereby ensuring security of the media information in the digital home multimedia system when the media information in the digital home multimedia system is aggregated for browsing.

### BRIEF DESCRIPTION OF DRAWINGS

FIG. 1 is an architecture diagram of a digital home multimedia system according to an embodiment of the present invention;
FIG. 2 is an implementation flowchart of a method for media information access control according to an embodiment of the present invention;
FIG. 3 is an implementation flowchart of a method for media information access control according to another embodiment of the present invention;
FIG. 4 is an implementation flowchart of a method for media information access control according to still another embodiment of the present invention;
FIG. 5 is an implementation flowchart of a method for media information access control according to yet another embodiment of the present invention;
FIG. 6 is a structural block diagram of an apparatus for media information access control according to an embodiment of the present invention;
FIG. 7 is a structural block diagram of an apparatus for media information access control according to another embodiment of the present invention; and
FIG. 8 is a structural block diagram of an apparatus for media information access control according to still another embodiment of the present invention.

### DESCRIPTION OF EMBODIMENTS

To make the objectives, technical solutions, and advantages of the present invention more comprehensible, the following further describes the present invention in detail with reference to the accompanying drawings and embodiments. It should be understood that the specific embodiments described herein are merely used for describing the present invention, but are not intended to limit the present invention.

In the embodiments of the present invention, a first media server aggregates media information and access rights information of the media information on a second media server. After receiving a media access request sent by a control device, the first media server returns, to the control device, according to the aggregated media information and the aggregated access rights information of the media information, a media information list which the control device has rights to access, thereby ensuring security of the media information in a digital home multimedia system when the media information in the digital home multimedia system is aggregated for browsing.

In order to describe the technical solutions of the present invention, the following uses specific embodiments for description.

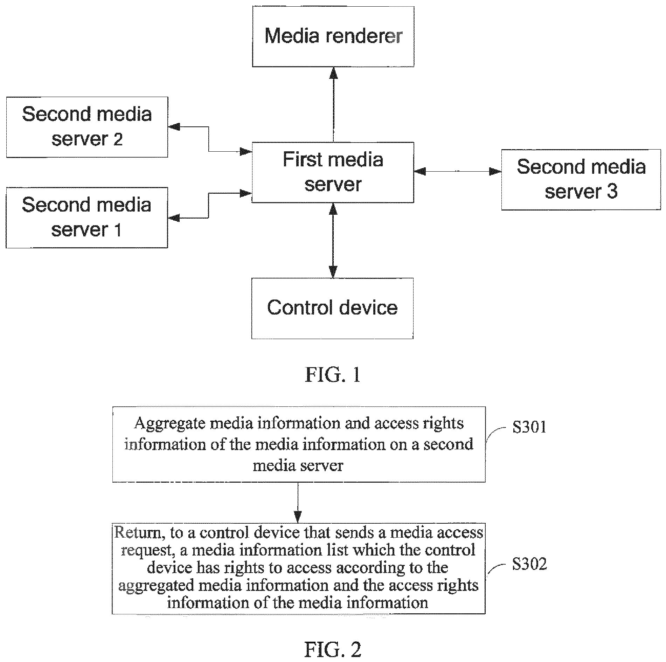

FIG. 1 shows a structure of a digital home multimedia system applicable to a method for media information access control provided by an embodiment of the present invention. For ease of description, only parts related to the embodiments of the present invention are shown.

The digital home multimedia system includes a control device, a first media server, several second media servers, and several media renderers. The first media server refers to a media server that can aggregate media information on another media server to the media server, and the second media server refers to another media server except for the first media server. A working principle of the digital home multimedia system is simply described as follows:

The first media server acquires, from the second media server, media information and access rights information of the media information stored on the second media server, and the first media server aggregates the media information and the access rights information of the media information that are acquired from the second media server.

A control device sends a media access request to the first media server. After receiving the media access request sent by the control device, the first media server searches, according to information of the control device, the aggregated media information and the aggregated access rights information of the media information, determines a media information list which the control device has rights to access, and returns, to the control device, the media information list which the control device has rights to access;
the control device controls transmission of the media information between a media renderer and the first media server according to the returned media information list, and outputs the media information by using the media renderer.

FIG. 2 is an implementation flowchart of a method for media information access control provided by an embodiment of the present invention, which is described in detail as follows:

S301: A first media server aggregates media information and access rights information of the media information on a second media server.

In this embodiment, the first media server may aggregate the media information and the access rights information of the media information on all the second media servers in a digital home multimedia system, and may also aggregate the media information and the access rights information of the media information on a specified second media server in the digital home multimedia system. The media information on the second media server is the media information stored or provided by the second media server, and the media information includes but is not limited to metadata, and the like.

The access rights information of the media information refers to the access rights information of the media information on the second media server which each control device in the digital home multimedia system accesses.

S302: Return, to a control device that sends a media access request, according to the aggregated media information and the aggregated access rights information of the media information, a media information list which the control device has rights to access.

In this embodiment, because the first media server aggregates the media information and the access rights information of the media information on the second media server, after receiving the media access request sent by the control device, the first media server returns, to the control device, only the media information list which the control device has rights to access, thereby ensuring security of the media information in the digital home multimedia system when the media information in the digital home multimedia system is aggregated for access.

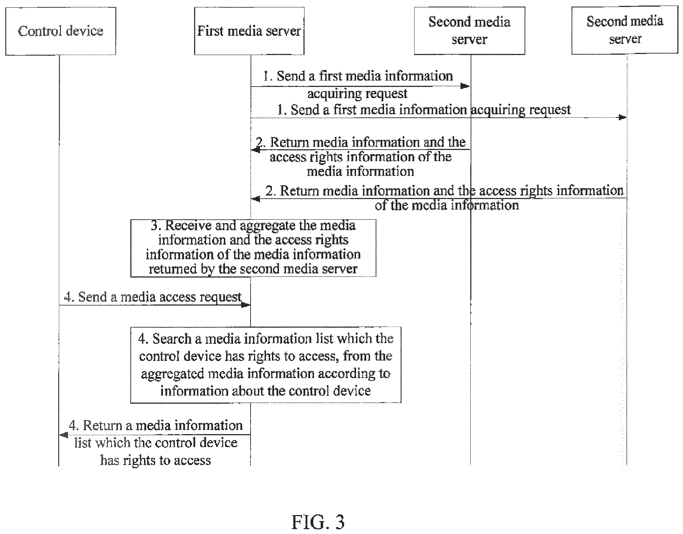

FIG. 3 is an implementation flowchart of a method for media information access control provided by another embodiment of the present invention, which is described in detail as follows:
1. A first media server sends a first media information acquiring request to a second media server.

In this embodiment, before the first media server sends the first media information acquiring request to the second media server, an aggregation control module AO CP needs to be embedded into the first media server. The aggregation control module has rights to acquire all the media information on all the second media servers, for example, one or more rights of the CDS on all the second media servers, such as super read rights (AV:SupperReader), super write rights (AV:SupperWriter), and administrator rights (Admin).

The access rights of the media information of the CDS on each second media server may be configured for the aggregation control module on the first media server as follows:

In one manner, the aggregation control module on the first media server and each second media server perform identity authentication on the aggregation control module on the first media server by using WPS (Wi-Fi Protected Setup, Wi-Fi Protected Setup), and an administrator of each media server assigns rights that is high enough to the aggregation control module, for example, one or more rights among the SupperReader, SupperWriter, and Admin.

In another manner, the aggregation control module on the first media server sends a rights application request to each second media server, and an admin control point (Admin CP) of each second media server performs authorization or a user performs authorization through each user interface (User Interface, MS UI).

In this embodiment, the first media information acquiring request includes a browsing command (such as Browse()) and a rights acquiring command (such as GetACLData()). The first media server may send a CDS::Browse() command and a DP::GetACLData() command to each second media server to send the first media information acquiring request to each second media server.

2. After receiving the first media information acquiring request sent by the first media server, the second media server returns respective media information and the access rights information of the media information to the first media server according to the media information acquiring request.

In this embodiment, the media information returned by the second media server to the first media server includes unrestricted media information and restricted media information. The unrestricted media information refers to the media information that each control device in the digital home multimedia system or a user may discretionarily access or play. The restricted media information refers to remaining media information except for the unrestricted media information. An example is used for description as follows, the media information returned by each second media server, however, is not limited by the following example:

For example, the media information (Media Metadata) returned by one of the second media servers, that is, CDS1, is as follows:
<item id="31" parentID="30" restricted="0">
<dc:title>Brand New Day</dc:title>
<upnp:class name="Vendor Album Art">
object.item.imageItem.photo.vendorAlbumArt
</upnp:class>
<upnp:inclusionControl>
<upnp:role>AV:Reader</upnp:role>
</upnp:inclusionControl>
<res protocolInfo-"http-get:*:image/jpeg:*"size="20000">
http://10.0.0.1/getcontent.asp?id=31
</res>
</item>
<item id="32" parentID="30" restricted="0">
<dc:title>Mountain</dc:title>
<upnp:class name="Vendor Album Art">
object.item.imageItem.photo.vendorAlbumArt
</upnp:class>
<res protocolInfo="http-get:*:image/jpeg:*"size="30000">
http://10.0.0.1/getcontent.asp?id=32
</res>
</item>

The foregoing example provides two picture resources. For a resource with Item id=31, an <upnp:inclusionControl> attribute exists, indicating that this resource is a restricted resource, and it is clear that a CP that accesses this resource must be at the AV:Reader level; while for a resource with Item id=32, no access restriction is set, that is, any CP may access the resource.

For example, the media information returned by another second media server CDS2 is as follows:
<item id="11'parentID="10" restricted="0">
<upnp:class>object.item.audioItem</upnp:class>
<upnp:album>Album 1</upnp:album>
<upnp:genre>Unknown</upnp:genre>
<upnp:artist>Unknown</upnp:artist>
<upnp:inclusionControl>
<upnp:role>AV:Reader</upnp:role>
</upnp:inclusionControl>
<res protocolInfo="http-get:*:audio/mpeg:*">
http://10.0.0.1/audio/O-MP3-12.mp3
</res>
</item>
<item id="1-1-1-3" parentID="1-1-1"restricted="1">
<dc:title>Album 1 Song 3</dc:title>
<upnp:class>object.item.audioItem</upnp:class>
<upnp:album>Album 1</upnp:album>
<upnp:genre>Unknown</upnp:genre>
<upnp:artist>Unknown</upnp:artist>
<res protocolInfo="http-get:*:audio/mpeg:*">
http://10.0.0.1/audio/O-MP3-13.mp3
</res>
</item>

In this example, two audio media resources are described. Because the <upnp:inclusionControl> attribute is set for a resource with Item id=11, the resource with Item id=11 is the restricted media information, and only a CP with the AV:SupperReader rights has rights to access this resource, whereas a resource with Item id=1-1-1-3 is the unrestricted media information.

The access rights information of the media information refers to the access rights information of the media information provided by the second media server which each control device or each user in the digital home multimedia system accesses. In this embodiment, the access rights information of the media information provided by each second media server which each control device in the digital home multimedia system accesses includes but is not limited to AV:SuperReader, AV:Writer, AV: Reader, AV:PublicWriter, and the like, and may also be customized by an equipment vendor or a user, for example, VendorA and Tim respectively indicate the rights of vendor A and user Tim. SuperReader indicates the super read rights, Writer indicates the common write rights, Reader indicates the common read rights, and PublicWriter indicates the public write rights. The read rights indicate that a certain media resource can be read, and the write rights indicate that a certain media resource can be modified or deleted. The super rights are higher than the common rights, and the common rights are higher than the public rights. If the rights of a piece of content is set to the public rights or is not indicated, the content is considered as the unrestricted media information.

An example is used for description as follows, the media information returned by each second media server, however, is not limited by the following example:

For example, the access rights information of the media information returned by one of the second media servers, that is, CDS1, is as follows:
<Identities>
<CP>
<ID>ad93e8f5-634b-4123-80ca-225886a5c0e8</ID>
<RoleList>Basic, AV:Reader</RoleList>
</CP>
<CP>
<ID>3543d8e6-3b8b-4456-81cb-f12886b5b044</ID>
<RoleList>Public</RoleList>
</CP>
</Identities>

In this example, the access rights information of the media information on the second media server CDS1 which two control devices access is described. That is, for the control device with CP ID= ad93e8f5-634b-4123-80ca-225886a5c0e8, the access rights information RoleList is Basic and AV:Reader; for the control device with CP ID= 3543d8e6-3b8b-445b-81cb-f12886b5b044, the access rights information RoleList is Public. To make the foregoing example description clearer, the content of the foregoing example description is described by using Table 1.

**Table 1**

| **CP ID** | **Rights** |
|---|---|
| CP ID= ad93e8f5-634b-4123-80ca-225886a5c0e8 | Basic |
| | AV:Reader |
| CP ID= 3543d8e6-3b8b-4456-81cb-f12886b5b044 | Public |

According to the access rights information of the media information described in Table 1, for the control device in the digital home multimedia system identified as ad93e8f5-634b-4123-80ca-225886a5c0e8, the corresponding access rights information of the media information on the second media server CDS1 is Basic and AV:Reader; for the control device in the digital home multimedia system identified as 3543d8e6-3b8b-4456-81cb-f12886b5b044, the corresponding access rights information of the media information on the second media server CDS1 is Public.

For example, the access rights information of the media information returned by another second media server CDS2 is as follows:
<Identities>
<CP>
<ID>ad93e8f5-634b-4123-80ca-225886a5c0e8</ID>
<RoleList>Public</RoleList>
</CP>
<CP>
<ID>3543d8c6-3b8b-4456-81cb-f12886b5b044</ID>
<RoleList>AV:Reader</RoleList>
</CP>
</Identities>

In this example, the access rights information of the media information on the second media server CDS2 which two control devices access is described. That is, for the control device with CP ID= ad93e8f5-634b-4123-80ca-225886a5c0e8, the access rights information RoleList is Public; for the control device with CP ID= 3543d8e6-3b8b-4456-81cb-f12886b5b044, the access rights information RoleList is AV:Reader. To make the foregoing example description clearer, the content of the foregoing example description is described by using Table 2.

**Table 2**

| **CP ID** | **Rights** |
|---|---|
| CP ID= ad93e8f5-634b-4123-80ca-225886a5c0e8 | Public |
| CP ID=3543d8e6-3b8b-4456-81cb-f12886b5b044 | AV:Reader |

According to the access rights information of the media information described in Table 2, for the control device in the digital home multimedia system identified as ad93e8f5-634b-4123-80ca-225886a5c0e8, the corresponding access rights information of the media information on the second media server CDS2 is Public; for the control device in the digital home multimedia system identified as 3543d8e6-3b8b-4456-81cb-f12886b5b044, the corresponding access rights information of the media information on the second media server CDS2 is AV:Reader.

3. The first media server receives and aggregates the media information and the access rights information of the media information that are returned by the second media server.

In this embodiment, the first media server aggregates the respective media information and the access rights information of the media information that are returned by the second media server into a media information access control list. The media information access control list is used to store the aggregated respective media information and the access rights information of the media information that are returned by each second media server. The aggregation manner includes but is not limited to the following types:

In one manner, the respective media information and the access rights information of the media information that are returned by each second media server are directly aggregated into the media information access control list. Referring to Table 3, Table 3 describes an example of directly aggregating the respective media information and the access rights information of the media information that are returned by each second media server into the media information access control list according to this embodiment, but the present invention is not limited to the example.

**Table 3**

| **CP ID** | **Second Media Server Identifier** | | | |
|---|---|---|---|---|
| | **CDS1** | | **CDS2** | |
| CP ID=ad93e8f5 -634b-4123-80ca-225886a5c0e8 | Role List: | Media Metadata: | Role List: | Media Metadata: |
| | Basic, AV:Reader | Item ID=31, | Public | Item ID=11, |
| | | Role=AV:Reader | | Role=AV:Reader |
| CP ID=3543d8e6-3b8b-4456-81cb-f12886b5b044 | Role List: | Item ID=32, | Role List: | Item ID=1-1-1-3, |
| | Public | Role=Public | AV:Reader | Role=Public |

When the Role of the media information is Public, it indicates the media information is the unrestricted media information.

In another manner, the first media server first adds, according to an identifier of the second media server, a corresponding identifier to the access rights information that is of the media information and returned by the second media server; and then aggregates the media information returned by the second media server and the access rights information that is of the media information and added with the corresponding identifier into the media information access control list.

For example, for the access rights information that is of the media information and returned by the second media server CDS 1 and shown in Table 1, after the corresponding identifier is added, according to an identifier of the second media server CDS1, to the access rights information that is of the media information and returned by the second media server CDS1, the access rights information of the media information is shown in Table 5.

**Table 5**

| **CP ID** | **Rights** |
|---|---|
| CP ID= ad93e8f5-634b-4123-80ca-225886a5c0e8 | Basic_1 |
| | AV:Reader_1 |
| CP ID= 3543d8e6-3b8b-4456-81cb-f12886b5b044 | Public_1 |

For example, for the access rights information that is of the media information and returned by the second media server CDS2 and shown in Table 2, after the corresponding identifier is added, according to an identifier of the second media server CDS1, to the access rights information that is of the media information and returned by the second media server CDS2, the access rights information of the media information is shown in Table 6.

**Table 6**

| **CP ID** | **Rights** |
|---|---|
| CP ID= ad93e8f5-634b-4123-80ca-225886a5c0e8 | Public_2 |
| CP ID=3543d8e6-3b8b-4456-81cb-f12886b5b044 | AV:Reader_2 |

After the media information returned by the second media server and the foregoing access rights information that is of the media information and added with the corresponding identifier are aggregated into the media information access control list, the media information access control list is shown in Table 7.

**Table 7**

| **CP ID** | **Rights** | **Media information** |
|---|---|---|
| CP ID=ad93e8f5-634b-4123-80ca-225886a5c0e8 | Role List: | Item ID=31, |
| | Basic_1, | Role=AV:Reader_1 |
| | AV:Reader_1, | Item ID=32, |
| | Public_2 | Role=Public |
| CP ID=3543d8e6-3b8b-4456-81cb-f12886b5b044 | Role List: | Item ID=11, |
| | Public_1, | Role=AV:Reader_2 |
| | AV:Reader_2 | Item ID=1-1-1-3, |
| | | Role=Public |

When the Role of the media information is Public, the media information is the unrestricted media information.

4. A media access request from the control device is received. The first media server searches the media information access control list according to information of the control device, and returns, to the control device, a media information list which the control device has rights to access.

The media access request sent by the control device may be a browsing request (for example, a Browse() command) or a searching request (for example, a Search () command).

When the media information access control list on the first media server is shown in Table 3, a specific process in which the first media server searches the media information access control list according to the information of the control device, and returns, to the control device, the media information which the control device has rights to access is as follows:

When a certain control device in the digital home multimedia system sends a media access request to the first media server, the first media server searches the media information access control list according to the information of the control device, and acquires access rights information of the control device; and then continues to search for the media information access control list according to the access rights information of the control device, acquires the media information list which the control device has rights to access, and returns, to the control device, the media information list which the control device has rights to access. An example is described as follows:

Assume that an identifier CP ID of the control device that sends the media access request to the first media server is ad93e8f5-634b-4123-80ca-225886a5c0e8, after the media information access control list shown in Table 3 is searched, the acquired access rights information of the control device is as follows: for the second media server CDS1, the Basic and AV:Reader rights are available; for the second media server CDS2, the Public rights are available.

Then, according to the access rights information (as described above, for the second media server CDS1, the Basic and AV:Reader rights are available; for the second media server CDS2, the Public rights are available) of the control device, the media information access control list shown in Table 3 continues to be searched, and the acquired media information list which the control device has rights to access is as follows:
Item ID=31;
Item ID=32;
Item ID=11;
Item ID=1-1-1-3

When the media information access control list on the first media server is shown in Table 7, a specific process in which the first media server searches the media information access control list according to the information of the control device, and returns, to the control device, the media information which the control device has rights to access is as follows:

When a certain control device in the digital home multimedia system sends a media access request to the first media server, the first media server searches the media information access control list according to the information of the control device, and acquires access rights information with an identifier of the control device; removes the identifier from the acquired access rights information of the control device; and then searches the media information access control list shown in Table 7 according to the access rights information of the control device with the identifier removed, acquires the media information which the control device has rights to access, and returns, to the control device, the media information list which the control device has rights to access. An example is described as follows:

Assume that the CP ID of the control device that sends the media information request to the first media server is ad93e8f5-634b-4123-80ca-225886a5c0e8, after the media information access control list shown in Table 7 is searched, the obtained access rights information with the identifier of the control device is as follows: Basic_1, AV:Reader_1, and Public_2.

After the identifier is removed from the access rights information of the control device, the access rights information of the control device is as follows: for the second media server CDS1, the Basic and AV:Reader rights are available; for the second media server CDS2, the Public rights are available.

Then, according to the access rights information (as described above, for the second media server CDS1, the Basic and AV:Reader rights are available; for the second media server CDS2, the Public rights are available) of the control device, the media information access control list shown in Table 7 continues to be searched, and the acquired media information which the control device has rights to access is as follows:
Item ID=31;
Item ID=32;
Item ID=11;
Item ID=1-1-1-3

In this embodiment, the first media server aggregates the unrestricted media information, the restricted information, and the access rights information of the media information on each second media server into the first media server at a time. Therefore, each control device in the digital home multimedia system only needs to access the media information provided by each second media server over the first media server instead of focusing on a specific storage location of the media information; meanwhile, when each control device accesses the media information provided by each second media server over the first media server, each control device has the same access rights as that provided when the media information on each second media server is directly accessed, thereby ensuring security of respective media information in the digital home multimedia system.

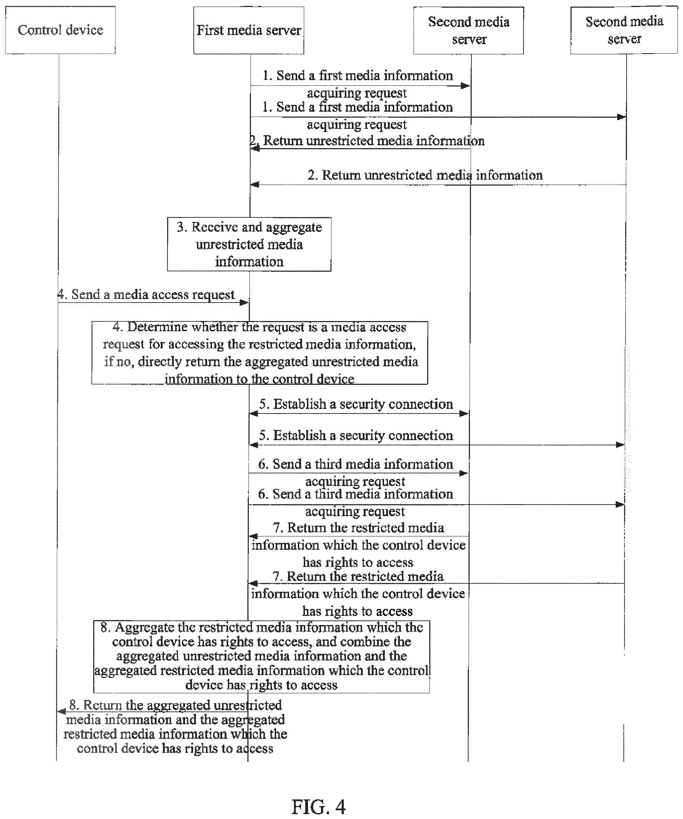

FIG. 4 shows an implementation process of a method for media information access control provided by another embodiment of the present invention. In this embodiment, an AO CP needs to be embedded into a first media server first, and the AO CP has rights to acquire all media information on all second media servers. The AO CP embedded into the first media server functions as a proxy (Proxy), aggregates the unrestricted media information on the second media server first, then aggregates the restricted media information on the second media server which the control device has rights to access when it is determined that the control device accesses the restricted media information, combines the aggregated unrestricted media information and the aggregated restricted media information which the control device has rights to access, and returns to the control device. The process is described in detail as follows:
1. The first media server sends a second media information acquiring request to the second media server.
   In this embodiment, when the first media server sends the first media information acquiring request to the second media server, the AO CP on the first media server does not have the rights to acquire all media information on all the second media servers.
   In this embodiment, the first media server may send a CDS::Browse(Root) command to the second media server, so that the first media server may send the second media information acquiring request to each second media server. 2. After receiving the second media information acquiring request sent by the first media server, the second media server returns respective unrestricted media information to the first media server according to the second media information acquiring request.
3. The first media server receives and aggregates the respective unrestricted media information returned by the second media server.
   In this embodiment, after receiving the unrestricted media information returned by each second media server, the first media server integrates the unrestricted media information returned by each second media server and uniformly aggregates the information to an unrestricted media information list to facilitate subsequent access.
4. The first media server receives the media access request from the control device and determines whether the media access request is a media access request for accessing the restricted media information. If not, the first media server directly returns the aggregated unrestricted media information to the control device; if yes, perform 5.
   In this embodiment, a manner of determining whether the media access request is the media access request for accessing the restricted media information may be as follows: the first media server determines whether the control device calls a Browse() or Search() command over a TLS tunnel. If yes, it is determined that the media access request is the media access request for accessing the restricted media information; if not, it is determined that the media access request is not the media access request for accessing the restricted media information.
   The media access request sent by the control device may be a browsing request (such as a Browse() command) or a searching request (such as a Search () command).
5. A security connection (such as a TLS connection) is established between the first media server and the second media server. A specific process of establishing the security connection between the first media server and the second media server pertains to the prior art, which is not repeatedly described herein.
6. The first media server sends a third media information acquiring request to the second media server by using the security connection. The third media information acquiring request carries a start path and identifier information (CPID) of the control device or a user name (Username). The start path refers to a certain level of a media resource storage directory selected by a user for browsing. The identifier information of the control device refers to an identifier of the control device that sends a browsing request to the first media server, and the identifier information of the control device may be a UUID (Universal Unique Identifier, Universal Unique Identifier) obtained by means of a hash value calculation according to a certificate of the control device. The user name refers to the Username, that is, a login account registered by the user on the device.

In this embodiment, when the first media server sends the third media information acquiring request to the second media server, the aggregation control module AO CP on the first media server needs to have the rights to acquire all media information on all the second media servers.

A specific manner for the first media server to send the third media information acquiring request to the second media server by using the security connection may be as follows: sending a CDS:Browse () command or a CDS:Search () command to the second media server.

A list of parameters in the Browse () command is shown in Table 8.

**Table 8**

| **Parameter** | **Direction** | **Description** |
|---|---|---|
| ObjectID | IN | Default |
| BrowseFlag | IN | |
| Filter | IN | |
| StartingIndex | IN | |
| RequestedCount | IN | |
| SortCriteria | IN | |
| CPID/Username | IN | Control device identifier/user name |
| Result | OUT | |
| NumberReturned | OUT | |
| TotalMatches | OUT | |
| UpdateID | OUT | |

A list of parameters in the Search () command is shown in Table 9.

**Table 9**

| **Parameter** | **Direction** | **Description** |
|---|---|---|
| ObjectID | IN | Default |
| SearchCriteria | IN | |
| Filter | IN | |
| Startinglndex | IN | |
| RequestedCount | IN | |
| SortCriteria | IN | |
| CPID/Username | IN | Control device identifier/user name |
| Result | OUT | |
| NumberReturned | OUT | |
| TotalMatches | OUT | |
| UpdateID | OUT | |

7. After receiving the third media information acquiring request sent by the first media server, the second media server returns the restricted media information which the control device has rights to access to the first media server according to the start path and the control device identifier (CPID) or the user name (Username) carried in the third media information acquiring request.
   In this embodiment, because the second media server stores the media information and the access rights information of the media information, when receiving the third media information acquiring request sent by the first media server, the second media server searches the access rights of the stored media information according to the control device identifier or the user name carried in the third media information acquiring request, acquires the access rights information of the control device, reads the restricted media information which the control device has rights to access from the media information according to the access rights information of the control device, and returns the restricted media information which the control device has rights to access to the first media server.
8. The first media server aggregates the restricted media information that is returned by the second media server and the control device has rights to access, combines the aggregated unrestricted media information and the aggregated restricted media information which the control device has rights to access, and returns to the control device.

In this embodiment, when the first media server aggregates only the unrestricted media information on the second media server, the media information aggregated on the first media server includes only the unrestricted media information, and the access rights information of the media information aggregated on the first media server is empty. When the first media server aggregates the unrestricted media information and the restricted media information, which the control device has rights to access, on the second media server, the media information aggregated in the first media information includes the unrestricted media information and the restricted media information which the control device has rights to access, and the access rights information of the media information aggregated on the first media server is implied in the aggregated restricted media information which the control device has rights to access.

In this embodiment, the AO CP embedded into the first media server functions as a proxy, aggregates the unrestricted media information on the second media server first. After receiving the media access request from the control device, the AO CP firstly determines whether the media access request is a media access request requesting for accessing the restricted media information. If not, the AO CP directly returns the aggregated unrestricted media information to the control device; if yes, the AO CP embedded into the first media server further aggregates the restricted media information, which the control device has rights to access, on the second media server, combines the aggregated unrestricted media information and the aggregated restricted media information which the control device has rights to access, and returns to the control device. Therefore, the control device may access the media information stored on each second media server in the digital home multimedia system by using the first media server, and has the same rights as that provided when the media information on each second media server is directly accessed.

In another embodiment of the present invention, the media access request sent by the control device may be received first, and it is determined whether the media access request is a media access request for accessing the restricted media information. If not, the unrestricted media information on the second media server is aggregated, and the aggregated unrestricted media information is returned to the control device; if yes, the unrestricted media information on the second media server continues to be aggregated. Meanwhile, the restricted media information, which the control device has rights to access, on the second media server is aggregated, the aggregated unrestricted media information and the aggregated restricted media information which the control device has rights to access are combined and returned to the control device. When it is determined that the media access request is the media access request for accessing the restricted media information, the unrestricted media information on the second media server and the restricted information which the control device has rights to access on the second media server may be aggregated at a time. A specific process is as follows:

When it is determined that the media access request is the media access request for accessing the restricted media information, the first media server sends a fifth media information acquiring request to the second media server. The fifth media information acquiring request includes identifier information of the control device. After receiving the fifth media information acquiring request, the second media server returns the unrestricted media information and the restricted media information which the control device has rights to access to the first media server.

In this embodiment, whether the media access request sent by the control device is the media access request for accessing the restricted media information is determined first. Then, according to a determining result, the unrestricted media information on the second media server is aggregated, or the unrestricted media information and the restricted media information, which the control device has rights to access, on the second media server are aggregated. Therefore, overhead of the first media server caused by the aggregation is reduced to a certain extent, while secure aggregation is satisfied.

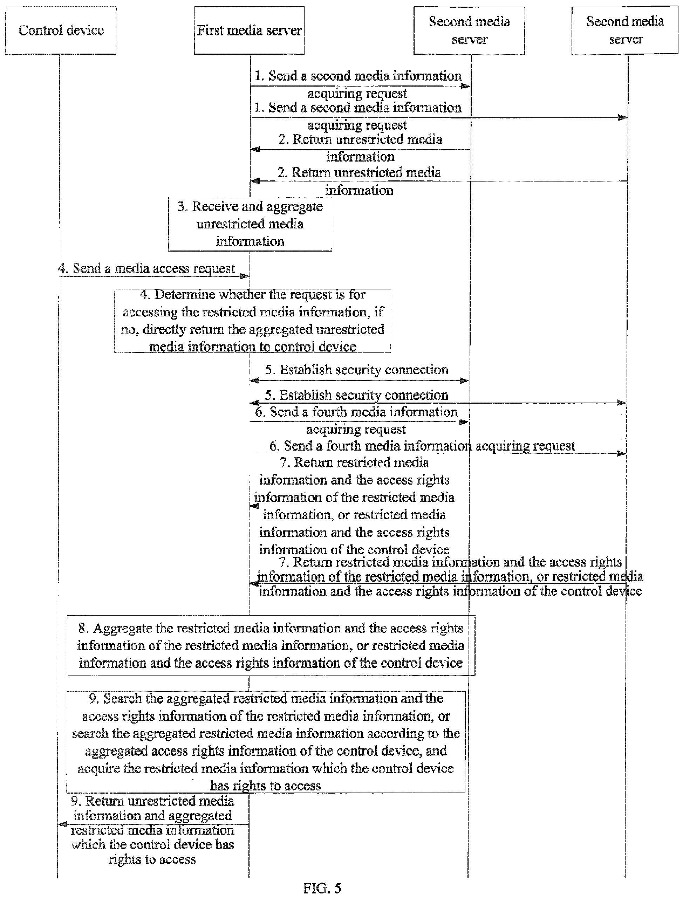

FIG. 5 shows an implementation process of a method for media access control provided by another embodiment of the present invention. In this embodiment, an AO CP needs to be embedded into a first media server first, and the AO CP has rights to acquire all media information on all second media servers. The AO CP embedded into the first media server functions as a proxy (Proxy), aggregates the unrestricted media information on the second media server first, then aggregates the restricted media information and the access rights information of the restricted media information or the restricted media information and access rights information of the control device on the second media server when it is determined that the control device accesses the restricted media information, combines the aggregated unrestricted media information and the aggregated restricted media information which the control device has rights to access, and returns to the control device. The process is described in detail as follows:
1. The first media server sends a second media information acquiring request to the second media server.
   In this embodiment, when the first media server sends the first media information acquiring request to the second media server, the AO CP on the first media server does not have the rights to acquire all media information on all the second media servers.
   The first media server may send a CDS::Browse(Root) command to the second media server, so as to send the second media information acquiring request to each second media server.
2. After receiving the second media information acquiring request sent by the first media server, the second media server returns respective unrestricted media information to the first media server according to the second media information acquiring request.
3. The first media server receives and aggregates the respective unrestricted media information returned by the second media server.
   In this embodiment, after receiving the unrestricted media information returned by each second media server, the first media server integrates the unrestricted media information returned by each second media server and uniformly aggregates the information to an unrestricted media information list to facilitate subsequent access.
4. The first media server receives the media access request from the control device and determines whether the media access request is a media access request for accessing the restricted media information. If not, the first media server directly returns the aggregated unrestricted media information to the control device; if yes, step 5 is performed. A manner of determining whether the media access request is the media access request for accessing the restricted media information is described above, which is not repeatedly described herein.
5. A security connection is established between the first media server and the second media server. A specific process of establishing the security connection between the first media server and the second media server pertains to the prior art, which is not repeatedly described herein.
6. The first media server sends a fourth media information acquiring request to the second media server by using the security connection. The fourth media information acquiring request includes identifier information of the control device.
   In this embodiment, when the first media server sends the fourth media information acquiring request to the second media server, the aggregation control module AO CP on the first media server needs to have the rights to acquire all media information on all the second media servers.
   In this embodiment, the first media server may send a CDS::Browse() command and a DP::GetACLData() command to the second media server, so as to send the fourth media information acquiring request to the second media server. A list of parameters in the Browse () command is shown in Table 8, which is not repeatedly described herein.
7. After receiving the fourth media information acquiring request sent by the first media server, the second media server returns respective restricted media information and the access rights information of the restricted media information to the first media server according to the fourth media information acquiring request, or returns respective restricted media information and the access rights information of the control device to the first media server.
   The second media server may search the access rights information of the stored media information according to the control device identifier carried in the fourth media information acquiring request to acquire the access rights information of the control device.
8. The first media server receives and aggregates the restricted media information and the access rights information of the restricted media information returned by the second media server or aggregates the restricted media information and the access rights information of the control device returned by the second media server. A specific aggregation process is described above, which is not repeatedly described herein.
9. The first media server searches the aggregated restricted media information and the access rights information of the restricted media information according to information of the control device, or searches the aggregated restricted media information according to the aggregated access rights information of the control device, acquires the restricted media information which the control device has rights to access, combines the aggregated unrestricted media information and the aggregated restricted media information which the control device has rights to access, and returns to the control device.

In this embodiment, when the media server aggregates only the unrestricted media information on the second media server, the media information aggregated on the first media server includes only the unrestricted media information, and the access rights information of the media information aggregated on the first media server is empty. When the first media server aggregates the unrestricted media information, the restricted media information, and the access rights information of the restricted media information on the second media server, the media information aggregated on the first media server includes the unrestricted media information and the restricted media information, and the access rights information of the media information aggregated on the first media server includes the access rights information of the restricted media. When the first media server aggregates the unrestricted media information, the restricted media information, and the access rights information of the control device on the second media server, the media information aggregated on the first media server includes the unrestricted media information and the restricted media information, and the access rights information of the media information aggregated on the first media server includes the access rights information of the control device.

In this embodiment, when the first media server aggregates the unrestricted media information on the second media server and receives the media access request sent by the control device, the first media server directly returns the aggregated unrestricted media information to the control device if the media access request is not the media access request for accessing the restricted media information, and further aggregates the restricted media information and the access rights information of the restricted media information on the second media server if the media access request is the media access request for accessing the restricted media information, or aggregates the restricted media information and the access rights information of the control device on the second media server, acquires the restricted media information which the control device has rights to access according to the information of the control device, combines the aggregated unrestricted media information and the restricted media information which the control device has rights to access, and returns to the control device. Therefore, in addition that security of the media information is ensured in an aggregated media browsing scenario, privacy of a user is protected when the user enjoys a convenient service of media aggregation.

In another embodiment of the present invention, a media access request sent by a control device may also be received first, and whether the media access request is a media access request for accessing restricted media information is determined. If not, unrestricted media information on a second media server is aggregated, and the aggregated unrestricted media information is returned to the control device; if yes, the unrestricted media information on the second media server is aggregated, and meanwhile, restricted media information and access rights information of the restricted media information or the restricted media information and the access rights information of the control device on the second media server are aggregated, and then the aggregated restricted media information and the access rights information of the restricted media information are searched according to information of the control device or the aggregated restricted media information is searched according to the aggregated access rights information of the control device, acquires the aggregated restricted media information which the control device has rights to access, combines the aggregated unrestricted media information and the aggregated restricted media information which the control device has rights to access, and returns to the control device.

When it is determined that the media access request is the media access request for accessing the restricted media information, the unrestricted media information on the second media server and the restricted media information, which the control device has rights to access, on the second media server may be aggregated at a time. A specific process is as follows:
When it is determined that the media access request is the media access request for accessing the restricted media information, the first media server sends a sixth media information acquiring request to the second media server. The sixth media information acquiring request includes identifier information of the control device. After receiving the sixth media information acquiring request, the second media server returns the unrestricted media information, and the restricted media information, and the access rights information of the restricted media information or the restricted media information and the access rights information of the control device to the first media server.

In this embodiment, whether the media access request sent by the control device is the media access request for accessing the restricted media information is determined first. Then, according to a determining result, the unrestricted media information on the second media server is aggregated, and the restricted media information is returned to the control device, or the unrestricted media information, the restricted media information, and the access rights information of the restricted media information on the second media server are aggregated, or the unrestricted media information, the restricted media information, and the access rights information of the control device on the second media server are aggregated. The aggregated restricted media information which the control device has rights to access is acquired according to the aggregated restricted media information, the access rights information of the restricted media information, or the restricted media information and the access rights information of the control device; and the aggregated unrestricted media information and the aggregated restricted media information which the control device has rights to access are returned to the control device, thereby reducing overhead of the first media server caused by the aggregation to a certain extent while satisfying secure aggregation.

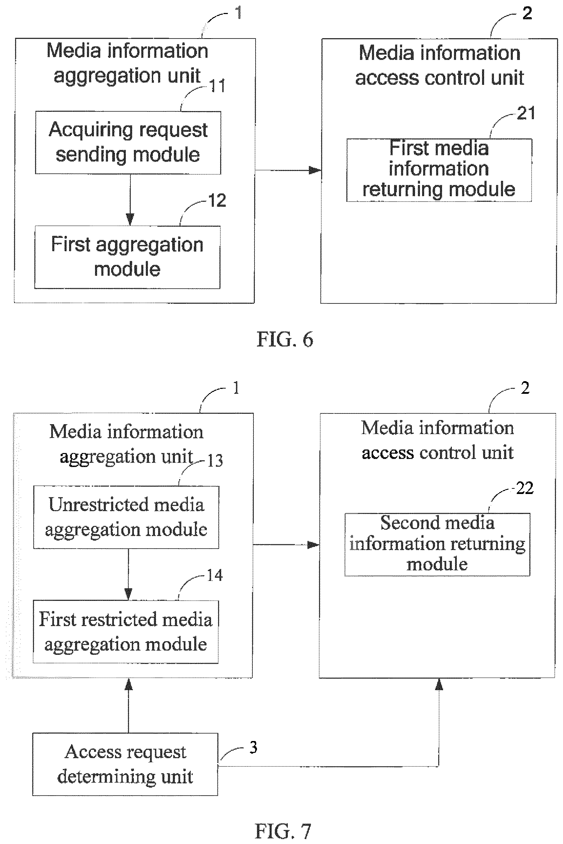

FIG. 6 shows a structure of an apparatus for media information access control provided by an embodiment of the present invention. For ease of description, only parts related to the embodiment of the present invention are shown.

The apparatus for media information access control may be used on a media server and may be a software unit, a hardware unit, or a unit combining software and hardware that runs within the media server, and may also act as an independent widget to be integrated into the media server or run in an application system of the media server.

A media information aggregation unit 1 is configured to aggregate media information and access rights information of the media information on a second media server.

In this embodiment, the first media server may aggregate the media information and the access rights information of the media information on all the second media servers in a digital home multimedia system, and may also aggregate the media information and the access rights information of the media information on a specified second media server in the digital home multimedia system.

A media information access control unit 2 returns, to a control device that sends a media access request, according to the media information and the access rights information of the media information that are aggregated by the media information aggregation unit 1, a media information list which the control device has rights to access.

The media information aggregation unit 1 includes an acquiring request sending module 11 and a first aggregation module 12; where
the acquiring request sending module 11 is configured to send a first media information acquiring request to the second media server, so that the second media server that receives the first media information acquiring request returns respective media information and the access rights information of the media information, where the media information includes unrestricted media information and restricted media information.

In this embodiment, before the first media server sends the first media information acquiring request to the second media server, an aggregation control module AO CP needs to be embedded into the first media server. The aggregation control module has rights to acquire all the media information on all the second media servers, for example, one or more rights of the CDS on all the second media servers, such as super read rights (AV:SupperReader), super write rights (AV:SupperWriter), and administrator rights (Admin).

A manner of configuring the access rights of the media information of the CDS on each second media server for the aggregation control module on the first media server is described above, which is not repeatedly described herein.

The first aggregation module 12 receives and aggregates the media information and the access rights information of the media information that are returned by the second media server.

In this embodiment, the first aggregation module 12 is specifically configured to aggregate the media information and the access rights information of the media information that are returned by the second media server into a media information access control list.

The aggregation manner includes but is not limited to the following types:

In one manner, the media information and the access rights information of the media information that are returned by the second media server are directly aggregated into the media information access control list.

In another manner, first, a corresponding identifier is added, according to an identifier of the second media server, to the access rights information that is of the media information and returned by the second media server; and then the media information returned by the second media server and the access rights information that is of the media information and added with the corresponding identifier are aggregated into the media information access control list.

A media information access control unit 2 includes a first media information returning module 21. The first media information returning module 21 searches the media information access control list according to information of the control device, and returns, to the control device that sends a media access request, the media information list which the control device has rights to access.

In an embodiment of the present invention, the first media information returning module 21 is specifically configured to search for the media information access control list according to the information of the control device that sends the media access request, and acquire access rights information of the control device; and continue to search for the media information access control list according to the access rights information of the control device, acquire the media information list which the control device has rights to access, and return, to the control device, the media information list which the control device has rights to access.

In another embodiment of the present invention, the first media information returning module 21 is further specifically configured to search for the media information access control list according to the information of the control device that sends the media access request, and acquire access rights information of the control device, where the access rights information of the control device includes an identifier that is added according to the identifier of the second media server; remove the identifier from the access rights information of the control device; and search for the media information access control list according to the access rights information of the control device with the identifier removed, acquire media information which the control device has rights to access, and return, to the control device, the media information which the control device has rights to access.

FIG. 7 shows a structure of an apparatus for media information access control provided by another embodiment of the present invention. For ease of description, only parts related to the embodiment of the present invention are shown; where
a media information aggregation unit includes an unrestricted media aggregation module 13 and a first restricted media aggregation module 14; where
the unrestricted media aggregation module 13 aggregates unrestricted media information on the second media server.

In this embodiment, the unrestricted media aggregation module 13 is specifically configured to send a second media information acquiring request to the second media server, so that the second media server that receives the second media information acquiring request returns respective unrestricted media information; and receive and aggregate the unrestricted media information returned by the second media server.

The first restricted media aggregation module 14 is configured to aggregate restricted media information, which the control device has rights to access, on the second media server.

In this embodiment, the first restricted media aggregation module 14 is specifically configured to establish a security connection to the second media server, and send a third media information acquiring request to the second media server by using the security connection, so that the second media server that receives the third media information acquiring request returns the restricted media information which the control device has rights to access; and receive and aggregate the restricted media information that is returned by the second media server and the control device has rights to access.

In another embodiment of the present invention, the apparatus further includes an access request determining unit 3. The access request determining unit 3 determines whether a received media access request sent by the control device is a media access request for accessing the restricted media information. If a result of the access request determining unit 3 is yes, the first restricted media aggregation module 14 aggregates the restricted media information, which the control device has rights to access, on the second media server.

In another embodiment of the present invention, when determining that the received media access request sent by the control device is not the media access request for accessing the restricted media information, the access request determining unit 3 triggers only the unrestricted media aggregation module 13; when determining that the received media access request sent by the control device is the media access request for accessing the restricted media information, the access request determining unit 3 triggers the unrestricted media aggregation module 13 and the first restricted media aggregation module 14.

The media information access control unit includes a second media information returning module 22. When the media access request sent by the control device is received, if the media access request is a media access request for accessing the restricted media information, the second media information returning module 22 combines the aggregated unrestricted media information and the aggregated restricted media information which the control device has rights to access, and returns to the control device; otherwise, directly returns the aggregated unrestricted media information to the control device.

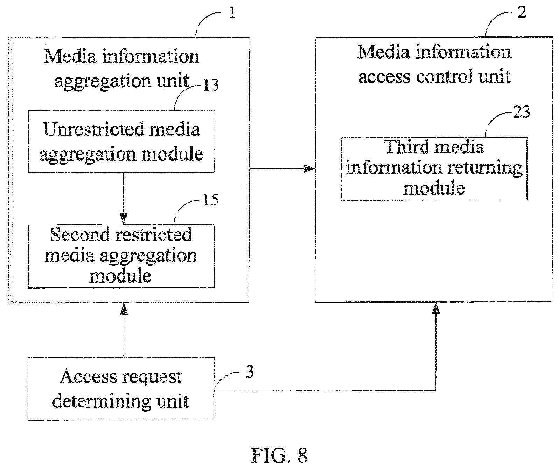

FIG. 8 shows a structure of an apparatus for media information access control provided by still another embodiment of the present invention. For ease of description, only parts related to the embodiment of the present invention are shown. A media information aggregation unit 1 includes an unrestricted media aggregation module 13 and a second restricted media aggregation module 15; where
the second restricted media aggregation module 15 aggregates the restricted media information and the access rights information of the restricted media information on the second media server or the restricted media information and the access rights information of the control device on the second media server.

In this embodiment, the second restricted media aggregation module 15 is specifically configured to establish a security connection to the second media server, and send a fourth media information acquiring request to the second media server by using the security connection, so that the second media server that receives the fourth media information acquiring request returns the restricted media information and the access rights information of the restricted media information or the restricted media information and the access rights information of the control device; and receive and aggregate the restricted media information and the access rights information of the restricted media information or the restricted media information and the access rights information of the control device that are returned by the second media server.

In another embodiment of the present invention, the apparatus further includes an access request determining unit 3. The access request determining unit 3 determines whether the media access request sent by the control device is a media access request for accessing the restricted media information; at this time, when a result of the access request determining unit 3 is yes, the second restricted media aggregation module 15 aggregates the restricted media information and the access rights information of the restricted media information on the second media server or the restricted media information and the access rights information of the control device on the second media server.

In another embodiment of the present invention, when determining that the received media access request sent by the control device is not the media access request for accessing the restricted media information, the access request determining unit 3 triggers only the unrestricted media aggregation module 13; when determining that the received media access request sent by the control device is the media access request for accessing the restricted media information, the access request determining unit 3 triggers the unrestricted media aggregation module 13 and the second restricted media aggregation module 15.

The media information access control unit 2 includes a third media information returning module 23. When the media access request sent by the control device is received, if the media access request is an media access request for accessing the restricted media information, the third media information returning module 23 searches, according to information of the control device, the aggregated media information and the aggregated access rights information of the media information, or searches the aggregated media information according to the aggregated access rights information of the control device, acquires the restricted media information which the control device has rights to access, combines the unrestricted media information and the restricted media information which the control device has rights to access, and returns to the control device; otherwise, directly returns the unrestricted media information to the control device.

It should be noted that in the foregoing apparatus for media information access control, the included units are divided only according to the functional logic, but are not limited to the foregoing division, as long as the corresponding function can be implemented; in addition, a specific name of each functional unit is only for facilitating distinguishing from each other, and is not intended to limit the protection scope of the present invention.

A person of ordinary skill in the art may understand that all or a part of the steps of the methods in the embodiments may be implemented by a program instructing relevant hardware. The program may be stored in a computer readable storage medium, such as a ROM, a RAM, a magnetic disk, or an optical disc.

In the embodiments of the present invention, by sending a media information requiring request to each second media server, a first media server acquires, from each second media server, a media information list and a media information rights list stored on each second media server, and the first media server aggregates the media information list and the media information rights list acquired from each second media server into a media information access control list.

The foregoing descriptions are merely exemplary embodiments of the present invention, but are not intended to limit the present invention.

## Claims

1. A method for media information access control, comprising:
aggregating, by a first media server, media information and access rights information of the media information on a second media server; and
returning, by the first media server, to a control device that sends a media access request, according to the aggregated media information and the aggregated access rights information of the media information, a media information list which the control device has rights to access;
wherein the aggregating, by the first media server, media information and access rights information of the media information on a second media server comprises:
aggregating unrestricted media information on the second media server; and aggregating restricted media information, which the control device has rights to access, on the second media server;
wherein after the aggregating unrestricted media information on the second media server, the method further comprises:
receiving the media access request sent by the control device; and when the media access request is a media access request for accessing the restricted media information, performing the aggregating restricted media information, which the control device has rights to access, on the second media server;
wherein the returning, to a control device that sends a media access request, according to the aggregated media information and the aggregated access rights information of the media information, a media information list which the control device has rights to access comprises:
when the media access request sent by the control device is received, if the media access request is a media access request for accessing the restricted media information, combining the aggregated unrestricted media information and the aggregated restricted media information which the control device has rights to access, and returning to the control device; otherwise, directly returning the aggregated unrestricted media information to the control device.

2. The method for media information access control according to claim 1, wherein the aggregating media information and access rights information of the media information on a second media server specifically comprises:
sending a first media information acquiring request to the second media server, so that the second media server that receives the first media information acquiring request returns respectively media information and access rights information of the media information, wherein the media information comprises unrestricted media information and restricted media information; and
receiving and aggregating the media information and the access rights information of the media information that are returned by the second media server.

3. The method for media information access control according to claim 2, wherein the aggregating the media information and the access rights information of the media information that are returned by the second media server specifically comprises:
aggregating the media information and the access rights information of the media information that are returned by the second media server into a media information access control list.

4. The method for media information access control according to claim 3, wherein the aggregating the media information and the access rights information of the media information that are returned by the second media server into a media information access control list specifically comprises:
directly aggregating the media information and the access rights information of the media information that are returned by the second media server into the media information access control list; or
first adding, according to an identifier of the second media server, a corresponding identifier to the access rights information that is of the media information and returned by the second media server; and then aggregating the media information returned by the second media server and the access rights information that is of the media information and added with the corresponding identifier into the media information access control list.

5. The method for media information access control according to any one of claims 1 wherein the aggregating media information and access rights information of the media information on a second media server specifically comprises:
aggregating the unrestricted media information on the second media server; and
aggregating the restricted media information and the access rights information of the restricted media information on the second media server, or the restricted media information and the access rights information of the control device on the second media server.

6. An apparatus for media information access control, comprising:
a media information aggregation unit (1), configured to aggregate media information and access rights information of the media information on a second media server; and
a media information access control unit (2), configured to return, to a control device that sends a media access request, according to the media information and the access rights information of the media information that are aggregated by the media information aggregation unit, a media information list which the control device has rights to access;
wherein the media information aggregation unit (1) comprises:
an unrestricted media aggregation module (13), configured to aggregate unrestricted media information on the second media server; and a first restricted media aggregation module (14), configured to aggregate restricted media information, which the control device has rights to access, on the second media server,
wherein the apparatus further comprises:
an access request determining unit (3), configured to determine whether a received media access request sent by the control device is a media access request for accessing the restricted media information; at this time, if a result of the access request determining unit is yes, the first restricted media aggregation module aggregates the restricted media information, which the control device has rights to access, on the second media server;
wherein the media information access control unit (2) comprises:
a second media information returning module (22), configured to: when the media access request sent by the control device is received, if the media access request is a media access request for accessing the restricted media information, combine the aggregated unrestricted media information and the aggregated restricted media information which the control device has rights to access, and return the combined media information to the control device; otherwise, directly returning the aggregated unrestricted media information to the control device.

7. The apparatus for media information access control according to claim 6, wherein the media information aggregation unit (1) comprises:
an acquiring request sending module (11), configured to send a first media information acquiring request to the second media server, so that the second media server that receives the first media information acquiring request returns respective media information and the access rights information of the media information, wherein the media information comprises unrestricted media information and restricted media information; and
a first aggregation module (12), configured to receive and aggregate the media information and the access rights information of the media information that are returned by the second media server.

8. The apparatus for media information access control according to claim 7, wherein the first aggregation module (12) is specifically configured to aggregate the media information and the access rights information of the media information that are returned by the second media server into a media information access control list.

9. The apparatus for media information access control according to claim 8, wherein the first aggregation module (12) is specifically configured to directly aggregate the media information and the access rights information of the media information that are returned by the second media server into the media information access control list; or first add, according to an identifier of the second media server, a corresponding identifier to the access rights information that is of the media information and returned by the second media server; and then aggregate the media information returned by the second media server and the access rights information that is of the media information and added with the corresponding identifier into the media information access control list.

10. The apparatus for media information access control according to any one of claims 6 to 9, wherein the media information aggregation unit (1) comprises:
an unrestricted media aggregation module (13), configured to aggregate unrestricted media information on the second media server; and
a second restricted media aggregation module (15), configured to aggregate the restricted media information and the access rights information of the restricted media information on the second media server or the restricted media information and the access rights information of the control device on the second media server.

11. The apparatus for media information access control according to claim 10, wherein the apparatus further comprises:
an access request determining unit (3), configured to determine whether a received media access request sent by the control device is a media access request for accessing the restricted media information; at this time,
when a result of the access request determining unit is yes, the second restricted media aggregation module aggregates the restricted media information and the access rights information of the restricted media information on the second media server or the restricted media information and the access rights information of the control device on the second media server.

12. The apparatus for media information access control according to claim 10, wherein the apparatus further comprises:
an access request determining unit (3), configured to determine whether a received media access request sent by the control device is a media access request for accessing the restricted media information; if the received media access request sent by the control device is not a media access request for accessing the restricted media information, trigger only the unrestricted media aggregation module; and if the received media access request sent by the control device is a media access request for accessing the restricted media information, trigger the unrestricted media aggregation module and the second restricted media aggregation module.

## Patentansprüche

1. Verfahren zur Medieninformationszugriffssteuerung, umfassend:
Aggregieren, durch einen ersten Medienserver, von Medieninformationen und Zugriffsberechtigungsinformationen der Medieninformationen auf einem zweiten Medienserver; und
Zurückgeben, durch den ersten Medienserver, an eine Steuervorrichtung, die eine Medienzugriffsanforderung sendet, gemäß der aggregierten Medieninformationen und der aggregierten Zugriffsberechtigungsinformationen der Medieninformationen, einer Medieninformationsliste, für die die Steuervorrichtung Zugriffsrechte hat;
wobei das Aggregieren, durch den ersten Medienserver, von Medieninformationen und Zugriffsberechtigungsinformationen der Medieninformationen auf einem zweiten Medienserver umfasst:
Aggregieren von uneingeschränkten Medieninformationen auf dem zweiten Medienserver; und Aggregieren von eingeschränkten Medieninformationen, für die die Steuervorrichtung Zugriffsrechte hat, auf dem zweiten Medienserver;
wobei nach dem Aggregieren von uneingeschränkten Medieninformationen auf dem zweiten Medienserver das Verfahren ferner umfasst:
Empfangen der Medienzugriffsanforderung, die von der Steuervorrichtung gesendet wurde; und wenn die Medienzugriffsanforderung eine Medienzugriffsanforderung für den Zugriff auf die eingeschränkten Medieninformationen ist, Durchführen des Aggregierens von eingeschränkten Medieninformationen, für die die Steuervorrichtung Zugriffsrechte hat, auf dem zweiten Medienserver;
wobei das Zurückgeben, an eine Steuervorrichtung, die eine Medienzugriffsanforderung sendet, gemäß der aggregierten Medieninformationen und der aggregierten Zugriffsberechtigungsinformationen der Medieninformationen, einer Medieninformationsliste, für die die Steuervorrichtung Zugriffsrechte hat, umfasst:
wenn die von der Steuervorrichtung gesendete Medienzugriffsanforderung empfangen wird, wenn die Medienzugriffsanforderung eine Medienzugriffsanforderung für den Zugriff auf die eingeschränkten Medieninformationen ist, Kombinieren der aggregierten uneingeschränkten Medieninformationen und der aggregierten eingeschränkten Medieninformationen, für die die Steuervorrichtung Zugriffsrechte hat, und Zurückgeben an die Steuervorrichtung; andernfalls direktes Zurückgeben der aggregierten uneingeschränkten Medieninformationen an die Steuervorrichtung.

2. Verfahren zur Medieninformationszugriffssteuerung nach Anspruch 1, wobei das Aggregieren von Medieninformationen und Zugriffsberechtigungsinformationen der Medieninformationen auf einem zweiten Medienserver insbesondere umfasst:
Senden einer ersten Medieninformationserfassungsanforderung an den zweiten Medienserver, sodass der zweite Medienserver, der die erste Medieninformationserfassungsanforderung empfängt, jeweils die Medieninformationen und Zugriffsberechtigungsinformationen der Medieninformationen zurückgibt, wobei die Medieninformationen uneingeschränkte Medieninformationen und eingeschränkte Medieninformationen umfassen; und
Empfangen und Aggregieren der Medieninformationen und der Zugriffsberechtigungsinformationen der Medieninformationen, die von dem zweiten Medienserver zurückgegeben werden.

3. Verfahren zur Medieninformationszugriffssteuerung nach Anspruch 2, wobei das Aggregieren der Medieninformationen und der Zugriffsberechtigungsinformationen der Medieninformationen, die von dem zweiten Medienserver zurückgegeben werden, insbesondere umfasst:
Aggregieren der Medieninformationen und der Zugriffsberechtigungsinformationen der Medieninformationen, die von dem zweiten Medienserver zurückgegeben werden, in einer Medieninformationszugriffssteuerungsliste.

4. Verfahren zur Medieninformationszugriffssteuerung nach Anspruch 3, wobei das Aggregieren der Medieninformationen und der Zugriffsberechtigungsinformationen der Medieninformationen, die von dem zweiten Medienserver zurückgegeben werden, in einer Medieninformationszugriffssteuerungsliste insbesondere umfasst:
direktes Aggregieren der Medieninformationen und der Zugriffsberechtigungsinformationen der Medieninformationen, die von dem zweiten Medienserver zurückgegeben werden, in der Medieninformationszugriffssteuerungsliste; oder
zunächst Hinzufügen, gemäß einer Kennung des zweiten Medienservers, einer entsprechenden Kennung zu den Zugriffsberechtigungsinformationen, die zu den Medieninformationen gehören und von dem zweiten Medienserver zurückgegeben werden; und dann Aggregieren der Medieninformationen, die von dem zweiten Medienserver zurückgegeben werden, und der Zugriffsrechtsinformationen, die zu den Medieninformationen gehören und mit der entsprechenden Kennung zu der Medieninformationszugriffssteuerungsliste hinzugefügt wurden.

5. Verfahren zur Medieninformationszugriffssteuerung nach einem der Ansprüche 1, wobei das Aggregieren von Medieninformationen und Zugriffsberechtigungsinformationen der Medieninformationen auf einem zweiten Medienserver insbesondere umfasst:
Aggregieren der uneingeschränkten Medieninformationen auf dem zweiten Medienserver; und
Aggregieren der eingeschränkten Medieninformationen und der Zugriffsberechtigungsinformationen der eingeschränkten Medieninformationen auf dem zweiten Medienserver oder der eingeschränkten Medieninformationen und der Zugriffsberechtigungsinformationen der Steuervorrichtung auf dem zweiten Medienserver.

6. Vorrichtung zur Medieninformationszugriffssteuerung, umfassend:
eine Medieninformationsaggregationseinheit (1), die konfiguriert ist, um Medieninformationen und Zugriffsberechtigungsinformationen der Medieninformationen auf einem zweiten Medienserver zu aggregieren; und
eine Medieninformationszugriffssteuereinheit (2), die konfiguriert ist, um, an eine Steuervorrichtung, die eine Medienzugriffsanforderung gemäß der Medieninformationen und der Zugriffsberechtigungsinformationen der Medieninformationen sendet, die von der Medieninformationsaggregationseinheit aggregiert werden, eine Medieninformationsliste zurückzugeben, für die die Steuervorrichtung Zugriffsrechte hat;
wobei die Medieninformationsaggregationseinheit (1) umfasst:
ein uneingeschränktes Medienaggregationsmodul (13), das konfiguriert ist, um uneingeschränkte Medieninformationen auf dem zweiten Medienserver zu aggregieren; und ein erstes eingeschränktes Medienaggregationsmodul (14), das konfiguriert ist, um eingeschränkte Medieninformationen, für die die Steuervorrichtung Zugriffsrechte hat, auf dem zweiten Medienserver zu aggregieren, wobei die Vorrichtung ferner umfasst:
eine Zugriffsanforderungsbestimmungseinheit (3), die konfiguriert ist, um zu bestimmen, ob eine von der Steuervorrichtung gesendete empfangene Medienzugriffsanforderung eine Medienzugriffsanforderung für den Zugriff auf die eingeschränkten Medieninformationen ist; wobei, wenn zu diesem Zeitpunkt ein Ergebnis der Zugriffsanforderungsbestimmungseinheit "Ja" ist, das erste eingeschränkte Medienaggregationsmodul die eingeschränkten Medieninformationen, für die die Steuervorrichtung Zugriffsrechte hat, auf dem zweiten Medienserver aggregiert;
wobei die Medieninformationszugriffssteuereinheit (2) umfasst:
ein zweites Medieninformationsrückgabemodul (22), das konfiguriert ist, um:
wenn die von der Steuervorrichtung gesendete Medienzugriffsanforderung empfangen wird, wenn die Medienzugriffsanforderung eine Medienzugriffsanforderung für den Zugriff auf die eingeschränkten Medieninformationen ist, die aggregierten uneingeschränkten Medieninformationen und die aggregierten eingeschränkten Medieninformationen zu kombinieren, für die die Steuervorrichtung Zugriffsrechte hat, und die kombinierten Medieninformationen an die Steuervorrichtung zurückzugeben; andernfalls direktes Zurückgeben der aggregierten uneingeschränkten Medieninformationen an die Steuervorrichtung.

7. Vorrichtung zur Medieninformationszugriffssteuerung nach Anspruch 6, wobei die Medieninformationsaggregationseinheit (1) umfasst:
ein Erfassungsanforderungssendemodul (11), das konfiguriert ist, um eine erste Medieninformationserfassungsanforderung an den zweiten Medienserver zu senden, sodass der zweite Medienserver, der die erste Medieninformationserfassungsanforderung empfängt, jeweils die Medieninformationen und die Zugriffsberechtigungsinformationen der Medieninformationen zurückgibt, wobei die Medieninformationen uneingeschränkte Medieninformationen und eingeschränkte Medieninformationen umfassen; und
ein erstes Aggregationsmodul (12), das konfiguriert ist, um die Medieninformationen und die Zugriffsberechtigungsinformationen der Medieninformationen, die von dem zweiten Medienserver zurückgegeben werden, zu empfangen und zu aggregieren.

8. Vorrichtung zur Medieninformationszugriffssteuerung nach Anspruch 7, wobei das erste Aggregationsmodul (12) insbesondere konfiguriert ist, um die Medieninformationen und die Zugriffsberechtigungsinformationen der Medieninformationen, die von dem zweiten Medienserver zurückgegeben werden, in einer Medieninformationszugriffssteuerungsliste zu aggregieren.

9. Vorrichtung zur Medieninformationszugriffssteuerung nach Anspruch 8, wobei das erste Aggregationsmodul (12) insbesondere konfiguriert ist, um die Medieninformationen und die Zugriffsberechtigungsinformationen der Medieninformationen, die von dem zweiten Medienserver zurückgegeben werden, direkt in der Medieninformationszugriffssteuerungsliste zu aggregieren; oder zunächst, gemäß einer Kennung des zweiten Medienservers, eine entsprechende Kennung zu den Zugriffsberechtigungsinformationen, die zu den Medieninformationen gehören und von dem zweiten Medienserver zurückgegeben werden, hinzuzufügen; und dann die Medieninformationen, die von dem zweiten Medienserver zurückgegeben werden, und die Zugriffsberechtigungsinformationen, die zu den Medieninformationen gehören und mit der entsprechenden Kennung zu der Medieninformationszugriffssteuerungsliste hinzugefügt wurden, zu aggregieren.

10. Vorrichtung zur Medieninformationszugriffssteuerung nach einem der Ansprüche 6 bis 9, wobei die Medieninformationsaggregationseinheit (1) umfasst:
ein uneingeschränktes Medienaggregationsmodul (13), das konfiguriert ist, um uneingeschränkte Medieninformationen auf dem zweiten Medienserver zu aggregieren; und
ein zweites eingeschränktes Medienaggregationsmodul (15), das konfiguriert ist, um die eingeschränkten Medieninformationen und die Zugriffsberechtigungsinformationen der eingeschränkten Medieninformationen auf dem zweiten Medienserver oder die eingeschränkten Medieninformationen und die Zugriffsberechtigungsinformationen der Steuervorrichtung auf dem zweiten Medienserver zu aggregieren.

11. Vorrichtung zur Medieninformationszugriffssteuerung nach Anspruch 10, wobei die Vorrichtung ferner umfasst:
eine Zugriffsanforderungsbestimmungseinheit (3), die konfiguriert ist, um zu bestimmen, ob eine von der Steuervorrichtung gesendete empfangene Medienzugriffsanforderung eine Medienzugriffsanforderung für den Zugriff auf die eingeschränkten Medieninformationen ist; wobei,
wenn zu diesem Zeitpunkt ein Ergebnis der Zugriffsanforderungsbestimmungseinheit "Ja" ist, das zweite eingeschränkte Medienaggregationsmodul die eingeschränkten Medieninformationen und die Zugriffsberechtigungsinformationen der eingeschränkten Medieninformationen auf dem zweiten Medienserver oder die eingeschränkten Medieninformationen und die Zugriffsberechtigungsinformationen der Steuervorrichtung auf dem zweiten Medienserver aggregiert.

12. Vorrichtung zur Medieninformationszugriffssteuerung nach Anspruch 10, wobei die Vorrichtung ferner umfasst:
eine Zugriffsanforderungsbestimmungseinheit (3), die konfiguriert ist, um zu bestimmen, ob eine von der Steuervorrichtung gesendete empfangene Medienzugriffsanforderung eine Medienzugriffsanforderung für den Zugriff auf die eingeschränkten Medieninformationen ist; wenn die von der Steuervorrichtung gesendete empfangene Medienzugriffsanforderung keine Medienzugriffsanforderung für den Zugriff auf die eingeschränkten Medieninformationen ist, nur das uneingeschränkte Medienaggregationsmodul auszulösen; und wenn die von der Steuervorrichtung gesendete empfangene Medienzugriffsanforderung eine Medienzugriffsanforderung für den Zugriff auf die eingeschränkten Medieninformationen ist, das uneingeschränkte Medienaggregationsmodul und das zweite eingeschränkte Medienaggregationsmodul auszulösen.

## Revendications

1. Procédé de contrôle d'accès à des informations multimédias, consistant à :
agréger, grâce à un premier serveur multimédia, des informations multimédias et des informations de droits d'accès des informations multimédias sur un second serveur multimédia ; et
renvoyer, grâce au premier serveur multimédia, à un dispositif de contrôle qui envoie une requête d'accès multimédia, en fonction des informations multimédias agrégées et des informations de droits d'accès agrégées des informations multimédias, une liste d'informations multimédias à laquelle le dispositif de contrôle possède les droits d'accès ;
dans lequel l'agrégation, grâce au premier serveur multimédia, des informations multimédias et des informations de droits d'accès des informations multimédias sur un second serveur multimédia consiste à :
agréger des informations multimédias non restreintes sur le second serveur multimédia ; et agréger des informations multimédias restreintes, auxquelles le dispositif de contrôle possède les droits d'accès, sur le second serveur multimédia ;
dans lequel après l'agrégation des informations multimédias non restreintes sur le second serveur multimédia, le procédé consiste en outre à :
recevoir la requête d'accès multimédia envoyée par le dispositif de contrôle ; et
lorsque la requête d'accès multimédia est une requête d'accès multimédia permettant d'accéder aux informations multimédias restreintes, effectuer l'agrégation des informations multimédias restreintes, auxquelles le dispositif de contrôle possède les droits d'accès, sur le second serveur multimédia ;
dans lequel le renvoi, à un dispositif de contrôle qui envoie une demande d'accès multimédia, en fonction des informations multimédias agrégées et des informations de droits d'accès agrégées des informations multimédias, d'une liste d'informations multimédias à laquelle le dispositif de contrôle possède les droits d'accès comprend :
lorsque la requête d'accès multimédia envoyée par le dispositif de contrôle est reçue, si la requête d'accès multimédia est une requête d'accès multimédia permettant d'accéder aux informations multimédias restreintes, combiner les informations multimédias non restreintes agrégées et les informations multimédias restreintes agrégées auxquelles le dispositif de contrôle possède les droits d'accès, et renvoyer au dispositif de contrôle ; sinon, renvoyer directement les informations multimédias non restreintes agrégées au dispositif de contrôle.

2. Procédé de contrôle d'accès à des informations multimédias selon la revendication 1, dans lequel l'agrégation des informations multimédias et des informations de droits d'accès des informations multimédias sur un second serveur multimédia consiste spécifiquement à :
envoyer une première requête d'acquisition d'informations multimédias au second serveur multimédia, de sorte que le second serveur multimédia qui reçoit la première requête d'acquisition d'informations multimédias renvoie respectivement les informations multimédias et les informations de droits d'accès des informations multimédias, dans lequel les informations multimédias comprennent des informations multimédias non restreintes et des informations multimédias restreintes ; et
recevoir et agréger les informations multimédias et les informations de droits d'accès des informations multimédias qui sont renvoyées par le second serveur multimédia.

3. Procédé de contrôle d'accès à des informations multimédias selon la revendication 2, dans lequel l'agrégation des informations multimédias et des informations de droits d'accès des informations multimédias qui sont renvoyées par le second serveur multimédia consiste spécifiquement à :
agréger les informations multimédias et les informations de droits d'accès des informations multimédias qui sont renvoyées par le second serveur multimédia dans une liste de contrôle d'accès à des informations multimédias.

4. Procédé de contrôle d'accès à des informations multimédias selon la revendication 3, dans lequel l'agrégation des informations multimédias et des informations de droits d'accès des informations multimédias qui sont renvoyées par le second serveur multimédia dans une liste de contrôle d'accès à des informations multimédias consiste spécifiquement à :
agréger directement les informations multimédias et les informations de droits d'accès des informations multimédias qui sont renvoyées par le second serveur multimédia dans la liste de contrôle d'accès à des informations multimédias ; ou
ajouter d'abord, en fonction d'un identifiant du second serveur multimédia, un identifiant correspondant aux informations de droits d'accès qui proviennent des informations multimédias et renvoyées par le second serveur multimédia, et ensuite agréger les informations multimédias renvoyées par le second serveur multimédia et les informations de droits d'accès qui proviennent des informations multimédias et ajoutées avec l'identifiant correspondant dans la liste de contrôle d'accès à des informations multimédias.

5. Procédé de contrôle d'accès à des informations multimédias selon l'une quelconque des revendications 1, dans lequel l'agrégation des informations multimédias et des informations de droits d'accès des informations multimédias sur un second serveur multimédia consiste spécifiquement à :
agréger les informations multimédias non restreintes sur le second serveur multimédia ; et
agréger les informations multimédias restreintes et les informations de droits d'accès des informations multimédias restreintes sur le second serveur multimédia, ou les informations multimédias restreintes et les informations de droits d'accès du dispositif de contrôle sur le second serveur multimédia.

6. Appareil de contrôle d'accès à des informations multimédias, comprenant :
une unité d'agrégation d'informations multimédias (1), conçue pour agréger des informations multimédias et des informations de droits d'accès des informations multimédias sur un second serveur multimédia ; et
une unité de contrôle d'accès à des informations multimédias (2), conçue pour renvoyer, à un dispositif de contrôle qui envoie une requête d'accès multimédia, en fonction des informations multimédias et des informations de droits d'accès des informations multimédias qui sont agrégées par l'unité d'agrégation d'informations multimédias, une liste d'informations multimédias à laquelle le dispositif de contrôle possède les droits d'accès ;
dans lequel l'unité d'agrégation d'informations multimédias (1) comprend :
un module d'agrégation multimédia non restreint (13), conçu pour agréger des informations multimédias non restreintes sur le second serveur multimédia ; et un premier module d'agrégation multimédia restreint (14), conçu pour agréger des informations multimédias restreintes, auxquelles le dispositif de contrôle possède les droits d'accès, sur le second serveur multimédia ;
dans lequel l'appareil comprend en outre :
une unité de détermination de requête d'accès (3), conçue pour déterminer si une requête d'accès multimédia reçue envoyée par le dispositif de contrôle est une requête d'accès multimédia permettant d'accéder aux informations multimédias restreintes ; à ce moment, si un résultat de l'unité de détermination de requête d'accès est oui, le premier module d'agrégation multimédia restreint agrège les informations multimédias restreintes, auxquelles le dispositif de contrôle possède les droits d'accès, sur le second serveur multimédia ;
dans lequel l'unité de contrôle d'accès à des informations multimédias (2) comprend :
un second module de renvoi d'informations multimédias (22), conçu pour : lorsque la requête d'accès multimédia envoyée par le dispositif de contrôle est reçue, si la requête d'accès multimédia est une requête d'accès multimédia permettant d'accéder aux informations multimédias restreintes, combiner les informations multimédias non restreintes agrégées et les informations multimédias restreintes agrégées auxquelles le dispositif de contrôle possède les droits d'accès, et renvoyer les informations multimédias combinées au dispositif de contrôle ; sinon, renvoyer directement les informations multimédias non restreintes agrégées au dispositif de contrôle.

7. Appareil de contrôle d'accès à des informations multimédias selon la revendication 6, dans lequel l'unité d'agrégation d'informations multimédias (1) comprend :
un module d'envoi de requête d'acquisition (11), conçu pour envoyer une première requête d'acquisition d'informations multimédias au second serveur multimédia, de sorte que le second serveur multimédia qui reçoit la première requête d'acquisition d'informations multimédias renvoie les informations multimédias respectives et les informations de droits d'accès des informations multimédias, les informations multimédias comprenant des informations multimédias non restreintes et des informations multimédias restreintes ; et
un premier module d'agrégation (12), conçu pour recevoir et agréger les informations multimédias et les informations de droits d'accès des informations multimédias qui sont renvoyées par le second serveur multimédia.

8. Appareil de contrôle d'accès à des informations multimédias selon la revendication 7, dans lequel le premier module d'agrégation (12) est conçu spécifiquement pour agréger les informations multimédias et les informations de droits d'accès des informations multimédias qui sont renvoyées par le second serveur multimédia dans une liste de contrôle d'accès à des informations multimédias.

9. Appareil de contrôle d'accès à des informations multimédias selon la revendication 8, dans lequel le premier module d'agrégation (12) est conçu spécifiquement pour agréger directement les informations multimédias et les informations de droits d'accès des informations multimédias qui sont renvoyées par le second serveur multimédia dans la liste de contrôle d'accès à des informations multimédias ; ou ajouter d'abord, en fonction d'un identifiant du second serveur multimédia, un identifiant correspondant aux informations de droits d'accès qui proviennent des informations multimédias et renvoyées par le second serveur multimédia ; et ensuite agréger les informations multimédias renvoyées par le second serveur multimédia et les informations de droits d'accès qui proviennent des informations multimédias et ajoutées avec l'identifiant correspondant dans la liste de contrôle d'accès à des informations multimédias.

10. Appareil de contrôle d'accès à des informations multimédias selon l'une quelconque des revendications 6 à 9, dans lequel l'unité d'agrégation d'informations multimédias (1) comprend :
un module d'agrégation multimédia non restreint (13), conçu pour agréger des informations multimédias non restreintes sur le second serveur multimédia ; et
un second module d'agrégation multimédia restreint (15), conçu pour agréger les informations multimédias restreintes et les informations de droits d'accès des informations multimédias restreintes sur le second serveur multimédia ou les informations multimédias restreintes et les informations de droits d'accès du dispositif de contrôle sur le second serveur multimédia.

11. Appareil de contrôle d'accès à des informations multimédias selon la revendication 10, dans lequel l'appareil comprend en outre :
une unité de détermination de requête d'accès (3), conçue pour déterminer si une requête d'accès multimédia reçue envoyée par le dispositif de contrôle est une requête d'accès multimédia permettant d'accéder aux informations multimédias restreintes ; à ce moment,
lorsqu'un résultat de l'unité de détermination de requête d'accès est oui, le second module d'agrégation multimédia restreint agrège les informations multimédias restreintes et les informations de droits d'accès des informations multimédias restreintes sur le second serveur multimédia ou les informations multimédias restreintes et les informations de droits d'accès du dispositif de contrôle sur le second serveur multimédia.

12. Appareil de contrôle d'accès à des informations multimédias selon la revendication 10, dans lequel l'appareil comprend en outre :
une unité de détermination de requête d'accès (3), conçue pour déterminer si une requête d'accès multimédia reçue envoyée par le dispositif de contrôle est une requête d'accès multimédia permettant d'accéder aux informations multimédias restreintes ; si la requête d'accès multimédia reçue envoyée par le dispositif de contrôle n'est pas une requête d'accès multimédia permettant d'accéder aux informations multimédias restreintes, déclencher seulement le module d'agrégation multimédia non restreint ; et si la requête d'accès multimédia reçue envoyée par le dispositif de contrôle est une requête d'accès multimédia permettant d'accéder aux informations multimédias restreintes, déclencher le module d'agrégation multimédia non restreint et le second module d'agrégation multimédia restreint.
